# DEMANDE DE BREVET EUROPEEN

(11) **EP 1 288 954 A1**
(43) Date de publication de la demande: **05.03.2003**
(21) Numéro de dépôt: 02291864.3
(22) Date de dépôt: 24.07.2002
(51) Int. Cl.: G11B 33/04

(54) **Sachet en matiere plastique de protection ou stockage d'objets**

(30) Priorité: 26.07.2001 FR 0109994
(71) Demandeur: S2F Flexico, 60119 Hennonville (FR)
(72) Inventeur: Bois, Henri George, 92200 Neuilly sur Seine (FR)
(74) Mandataire: Texier, Christian

(57) **Abrégé**

La présente invention concerne un sachet en matière plastique de protection ou stockage d'objets, par exemple de CD ROM, comprenant une pochette (20) munie de moyens de liaison (32) au niveau d'une bordure latérale (30), caractérisé par le fait qu'il comprend au moins deux lignes de soudure (42, 44) parallèles entre elles, formant deux lignes d'articulation, entre la pochette (20) et la bordure latérale (30).

## Description

La présente invention concerne le domaine des sachets de protection ou stockage d'objets, par exemple mais non limitativement de CD ROM.

Plus précisément encore la présente invention s'applique notamment mais non exclusivement aux sachets destinés à être assemblés dans un classeur.

On connaît de nombreux sachets réalisés en matière plastique, par exemple en polypropylène, comprenant une pochette munie d'oeillets sur une bordure latérale. Typiquement, les pochettes sont ainsi munies de deux oeillets. Ceux-ci sont destinés à être engagés sur les attaches d'un classeur.

Généralement, il est prévu une ligne de soudure des deux éléments de feuilles composant le sachet entre la poche et la bordure latérale.

Les sachets du type précité ont déjà rendu de grands services. Cependant, ils ne donnent pas toujours totalement satisfaction.

En particulier, les sachets connus conduisent parfois à un mauvais positionnement lorsqu'un nombre important de sachets remplis sont empilés.

La présente invention a pour but d'améliorer la situation.

Ce but est atteint dans le cadre de la présente invention, grâce à un sachet en matière plastique de protection ou stockage d'objets, par exemple de CD ROM, comprenant une pochette munie de moyens de liaison au niveau d'une bordure latérale, caractérisé par le fait qu'il comprend au moins deux lignes de soudure parallèles formant deux lignes d'articulation, entre la pochette et la bordure latérale.

D'autres caractéristiques, buts et avantages de la présente invention apparaîtront à la lecture de la description détaillée qui va suivre, et en regard des dessins annexés, donnés à titre d'exemple non limitatif et sur lesquels :
- la figure 1 représente une vue latérale en plan d'un sachet conforme à la présente invention, et
- la figure 2 représente une vue sur la tranche d'une pile de sachets conforme à la présente invention.

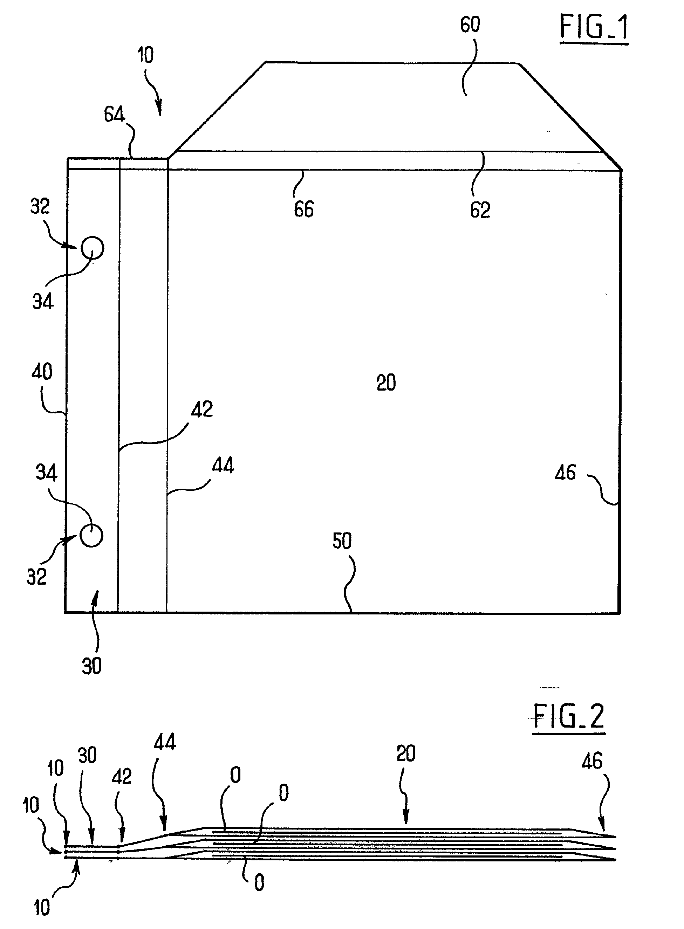

Le sachet 10 représenté sur la figure 1 annexée comprend une pochette 20, une bordure latérale 30 comprenant des moyens de fixation 32, ici composés de deux oeillets 34 sous forme de perforations traversantes, et deux lignes de soudure parallèles 42, 44 formant deux lignes d'articulation.

Plus précisément encore, selon le mode de réalisation préférentiel, illustré sur la figure annexée, la pochette 20 est de géométrie rectangulaire (elle pourrait être de géométrie autre, par exemple circulaire) et réalisée à partir d'une feuille unique de matière plastique repliée sur elle-même.

La ligne de pliage de la feuille précitée est référencée 50. Cette ligne de pliage est perpendiculaire aux lignes de soudure 42, 44 précitées.

Après pliage de la feuille de matière plastique autour de la ligne 50, l'article conforme à l'invention se présente sous forme de deux éléments superposés de même largeur (considérés dans une direction parallèle à la ligne de pliage 50).

Après ce pliage, quatre soudures rectilignes, parallèles entre elles et perpendiculaires à la ligne de pliage 50 sont réalisées sur toute la hauteur des éléments de feuilles superposées.

Ces quatre lignes de soudure sont référencées 40, 42, 44 et 46.

Les deux soudures 40, 46 les plus externes définissent les limites d'encombrement du sachet. Les deux soudures internes 42, 44 définissent des lignes d'articulation ou charnières.

La bordure latérale 30 est définie entre une soudure externe 40 et une soudure interne 42. La distance entre ces deux lignes de soudure 40, 42 qui définit la largeur de la bordure latérale 30 est typiquement de l'ordre de 15mm. De préférence, les moyens de fixation 32 prévus dans la bordure latérale 30 sont formés de deux orifices traversant 34 circulaires, par exemple d'un diamètre de l'ordre de 6mm avec un entraxe de l'ordre de 8cm.

La distance entre les deux soudures internes 42, 44 est typiquement de l'ordre de 14mm.

La distance entre la soudure interne 44 et la soudure externe 46 est typiquement de l'ordre de 127mm.

Par ailleurs, la hauteur de l'un des éléments de feuilles ainsi replié est typiquement de l'ordre de 125mm.

Ainsi la pochette 20 a typiquement des dimensions de 125x127mm.

Le second élément de feuille sous-jacent a de préférence une hauteur, considérée perpendiculairement à la ligne de pliage 50, supérieure au premier élément précité.

Le second élément de feuille a ainsi typiquement une hauteur supérieure d'environ 3mm au premier élément de feuille, en regard des deux zones définies par les lignes de soudure précitées 40, 42 et 44.

En regard de la troisième zone correspondant à la pochette 20 définie entre les lignes de soudure 44, 46, le second élément de feuille se prolonge de préférence sous forme d'un volet de fermeture 60. Le volet de fermeture 60 a typiquement une forme de trapèze isocèle.

Par ailleurs, ce volet 60 est de préférence relié à son élément de feuille par l'intermédiaire d'une ligne de pré-pliure 62 parallèle à la ligne de pliage principale 50.

La ligne de pré-pliure 62 peut être alignée sur le bord 64 du second élément de feuille prévu en regard des zones définies par les lignes de soudure 40, 42 et 44, lequel dépasse d'environ 3mm par rapport au bord 66 du premier élément de feuille. Cependant, de préférence, la ligne de pré-pliure 62 est située au-delà du bord 64 d'une distance de l'ordre de 2mm.

Le sachet conforme à la présente invention est réalisé de préférence en polypropylène d'une épaisseur de l'ordre de 150µm.

Pour utiliser le sachet conforme à la présente invention, il suffit, après avoir glissé l'objet à protéger dans la pochette 20 par la feuillure existant entre les deux éléments de feuilles au niveau du bord 66, de replier le volet 60 autour de la ligne de pré-pliure 62 et de préférence d'engager ce volet à l'intérieur de la pochette 20.

L'objet O, tel qu'un CD ROM est ainsi parfaitement protégé.

Par ailleurs, comme on le comprend à l'examen de la figure 2, grâce à la double articulation définie par les deux lignes de soudure 42, 44, quelque soit le nombre de sachets empilés et la hauteur des objets O ainsi protégés, les sachets 10 remplis restent parfaitement parallèles.

On obtient ainsi une parfaite tenue des sachets à l'intérieur de tout classeur connu.

Par ailleurs le sachet conforme à la présente invention est particulièrement bien adapté pour un ensachage automatique.

Bien entendu la présente invention n'est pas limitée au mode de réalisation particulier qui vient d'être décrit, mais s'étend à toute variante conforme à son esprit.

## Revendications

1. Sachet en matière plastique de protection ou stockage d'objets, par exemple de CD ROM, comprenant une pochette (20) munie de moyens de liaison (32) au niveau d'une bordure latérale (30), **caractérisé par le fait qu'**il comprend au moins deux lignes de soudure (42, 44) parallèles entre elles, formant deux lignes d'articulation, entre la pochette (20) et la bordure latérale (30).

2. Sachet selon la revendication 1, **caractérisé par le fait que** les moyens de liaison (32) comprennent au moins deux oeillets (34) sous forme de perforations traversantes.

3. Sachet selon l'une des revendications 1 ou 2, **caractérisé par le fait qu'**il est réalisé à partir d'une feuille unique de matière plastique repliée sur elle-même.

4. Sachet selon l'une des revendications 1 à 3, **caractérisé par le fait que** la pochette (20) est de géométrie rectangulaire.

5. Sachet selon l'une des revendications 1 à4, **caractérisé par le fait qu'**il est réalisé à partir d'une feuille unique repliée sur elle-même et munie de quatre soudures (40, 42, 44, 46) rectilignes, parallèles entre elles et perpendiculaires à la ligne de pliage (50).

6. Sachet selon l'une des revendications 1 à 5, **caractérisé par le fait que** la distance entre les deux lignes d'articulation (42, 44) est de l'ordre de 14mm.

7. Sachet selon l'une des revendications 1 à 6, **caractérisé par le fait qu'**il est réalisé par pliage d'une feuille de matière plastique sur elle-même sous forme de deux éléments superposés, l'un présentant une hauteur supérieure à l'autre.

8. Sachet selon la revendication 7, **caractérisé par le fait que** l'élément de feuille de matière plastique le plus haut présente un volet de fermeture (60).

9. Sachet selon la revendication 8, **caractérisé par le fait que** le sachet de fermeture a la forme d'un trapèze isocèle.

10. Sachet selon l'une des revendications 1 à 9, **caractérisé par le fait qu'**il est réalisé en polypropylène d'une épaisseur de l'ordre de 150µm.
